# EUROPEAN PATENT SPECIFICATION

(11) **EP 3 746 691 B1**
(45) Date of publication and mention of the grant of the patent: **07.12.2022**
(21) Application number: 18704457.3
(22) Date of filing: 29.01.2018
(51) Int. Cl.: F16L 23/026, F17D 5/02, G01M 3/00, F16L 23/16, G01M 3/28

(54) **A FLANGE ASSEMBLY**
FLANSCHANORDNUNG
ENSEMBLE BRIDE

(43) Date of publication of application: 09.12.2020
(73) Proprietor: Wärtsilä Finland Oy, 65100 Vaasa (FI)
(72) Inventor: SANDBERG, Juho, 65380 Vaasa (FI); ERONEN, Olli, 65380 Vaasa (FI)
(74) Representative: Genip Oy
(86) International application number: PCT/EP2018/052094
(87) International publication number: WO 2019/145050

(56) References cited:
- WO-A1-2010/092326
- FR-A1- 2 906 007
- US-A- 5 170 659
- US-A1- 2007 051 164

## Description

### Technical field

The present invention relates to flange assembly, comprising at least a flange provided with a flange opening in the flange and a pipe arranged into the flange opening so that the flange is overlapping the end of the pipe according to the preamble of claim 1.

### Background art

Leakage of flammable fluids is the most common cause of fire in engine rooms in e.g. marine vessels. It can be said, that especially pipe joints are a risk for leakage of fluids. For example, the splash guards in pipe connections may not preventing the leaking spray completely. There may be several reasons behind this, such as not enough tight splash guard, or it is not properly installed. In addition, the splash guard is a separate part, which can be forgotten to mount.

A flange joint is a connection of pipes, where the connecting pieces have flanges by which the parts are bolted together. The major reasons for leaking of the flange joint are a damaged sealing, a damaged sealing surface, screws are not tightened or those are loosen or broken. In addition, the weldings between the pipes and the flanges may leak or crack.

Other challenges with the pipelines and with the pipe joints arises is a leak detection. The leak detection is used to determine if, and in some cases where, a leak has occurred in the systems, which contain liquids and gases. The challenges are for instance an accurate and rapid detection of leakage of the flange connections, thus minimizing the leakage into the surrounding space.

One of the prior art solutions is described in DE2239314 A1, which shows a safety flange connection with double seals, which are designed as flat gaskets. The bores lead to the clearance. The measuring devices or discharges to be connected to the bores enable the sealing of the flange connection to be monitored, or to prevent any leaks occurring.

In a publication EP2354439 there is shown a piping connection, where, the inward migration of air through a bolted flanged connection, and into a vessel or piping containing a flammable gas under negative pressure, may be prevented by providing double seal means between the mating faces of the two flanges being connected, with the double seal means being configured to form an annular chamber into which a blanketing gas is introduced, at a pressure higher than atmospheric. The double seals provide an inner seal and an outer seal against the flanges faces, with the inner and outer seals being spaced so as to form an annular chamber.

An example of checking leaks is disclosed in a publication US4420970 A, which discloses an apparatus for checking for leaks between the connection flanges of two portions of metal-clad electric gear, said flanges being sealed by means of two seals disposed concentrically in series on the facing surfaces of the flanges, said electric gear being filled with compressed gas, wherein the internal volume lying between the two seals communicates with a smooth hole which itself communicates to the outside, said smooth hole being plugged by a resilient seal.

Document WO2010092326 A1 discloses a swivel joint comprising a housing, a first pipe portion for a fluid, a second pipe portion for the fluid, first and second bearings which enable 360° relative rotation of the second pipe portion with respect to the first pipe portion, a metal seal for effecting a seal between the housing and the second pipe portion, a first test conduit which is for testing the sealing of the swivel joint and which extends through the housing to a position adjacent a first side of the metal seal, a second test conduit which is for testing the swivel joint and which extends through the housing to a position adjacent a second side of the metal seal, and the swivel joint being such that the metal seal is a pressure energiseable metal seal which is energised by pressure in the swivel joint, the first side of the metal seal faces towards the first pipe portion, and the second side of the metal seal faces towards the second pipe portion.

Document US2007051164 A1 discloses a system for verifying the integrity of a seal which comprises an elastomeric seal on either side of a metal sealing gasket. A pressure test penetration is provided into an axial channel at a position between the metal sealing gasket and the lower of the elastomeric seals. Document US5170659A discloses an apparatus and method for detecting fluid leakage into an enclosed leakage chamber or space sealed by a fluid seal exposed to pressurized fluid from a flow line or pressure vessel. Upon leakage of fluid from the flow line or pressure vessel past the seal into the leakage chamber or space, the leaked fluid is communicated to a piston chamber in a fluid indicator device. Upon the reaching of a predetermined high fluid pressure, the piston is actuated for extending an indicator rod of the fluid indicator into a projected position for visual observation.

Thus, there is a need to develop a more secure flange joint with minimum risk to leak flammable fluid, for example, into the environment. In this invention, a new type of flange joint is disclosed with a leak-free design.

An object of the invention is to provide a flange connection, which is reliable, and a leak detection considerably improved compared to the prior art solutions.

### Disclosure of the Invention

Objects of the invention can be met substantially as is disclosed in the independent claim and in the other claims describing more details of different embodiments of the invention.

According to the invention a flange assembly comprises at least one flange provided with a flange opening in the at least flange, and a pipe arranged into the flange opening so that the at least one flange is overlapping the end of the pipe. In the assembly the pipe is sealed to the at least one flange by a first axial sealing and a second axial sealing arranged consecutively in axial direction, and a first leak indicating channel is arranged to extend from the flange opening, through a body of the at least one flange, into the outside of the at least one flange, and the first leak indicating channel opens into a gap between the pipe and the at least one flange at a location between the first axial sealing and the second axial sealing.

The first leak indicating channel may be connected to or provided with a desired means for detecting a leak. This way a possible leak in the first axial sealing between the pipe and the flange can be detected by the first leak indicating channel prior to the leak will occur out from the flange assembly.

According to the invention the flange comprises a connection surface for connecting the at least one flange in a sealed manner, and the connection surface is provided with a first radial sealing and a second radial sealing arranged consecutively onto the connection surface, and a second leak indicating channel arranged to extend from the connection surface of the at least one flange, through a body of the at least one flange, into the outside of the at least one flange. The second leak indicating channel is arranged to open into the connection surface of the at least one flange at a location between the first radial sealing and the second radial sealing on the connection surface.

This way a possible leak through the connection surface of the flange can be detected by the second leak indicating channel, prior to the leak will occur out from the flange assembly.

According to the invention in the assembly the pipe is sealed to the flange by the first axial sealing and the second axial sealing arranged consecutively in axial direction, and the first leak indicating channel is arranged to extend from the flange opening, through a body of the flange, into the outside of the flange, and the first leak indicating channel opens into a gap between the pipe and the flange at a location axially between the first axial sealing and the second axial sealing. Additionally the flange comprises connection surface for connecting the flange in a sealed manner, and the connection surface is provided with the first radial sealing and the second radial sealing arranged consecutively onto the connection surface, and the second leak indicating channel arranged to extend from the connection surface of the flange, through a body of the flange, into the outside of the flange, wherein the second leak indicating channel is arranged to open into the connection surface of the flange at a location between the first radial sealing and the second radial sealing on the connection surface.

This way a possible leak in the first axial sealing between the pipe and the flange can be detected by the first leak indicating channel, as well as a leak through the connection surface of the flange by the second leak indicating channel, prior to the leak will occur out from the flange assembly.

According to an embodiment of the invention the flange assembly comprises at least a first flange with the first flange opening and a second flange with a second flange opening, which flanges are arranged their connection surfaces against each other, and a first pipe arranged into the first flange opening and a second pipe arranged into the second flange opening. The pipes are attached to the flanges by a first continuous welding around the pipe inside the flange opening and by a second continuous welding around the pipe outside the flange, sealing the pipe to the flange, and the assembly comprises first leak indicating channel arranged to extend from the flange opening of both of the flanges, through the body of the flange, into the outside of the flange. The first leak indicating channel opens into a gap between pipe and the flange at a location axially between the first continuous welding and the second continuous welding. The first leak indicating channels in flanges can be eventually combined prior to leading out of one of the two flanges.

According to an embodiment of the invention there is an annular groove in the connection surface of the flange, which groove is arranged radially between the first radial sealing and the second radial sealing into which groove the second leak indicating channel is arranged to open. The annular groove functions as a common collector of the leak indicator channels in the flange assembly.

According to an embodiment of the invention the first radial sealing is arranged to the radially extending first portion of the connection surface of the flange and the second radial sealing is arranged to the axially extending second portion of the connection surface of flange.

According to an embodiment of the invention, the assembly is provided with a leak detection device and the leak indicating channel is in flow communication with the leak detection device.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated. The novel features which are considered as characteristic of the invention are set forth in particular in the appended claims. The axial direction means generally the direction of the longitudinal axis of a pipe arranged into the flange opening. The radial direction means generally a direction substantially perpendicular to the axial direction. When referred to the sealings, axial means general direction of possible leak in axial direction and radial means general direction of possible leak in radial direction.

### Brief Description of Drawings

In the following, the invention will be described with reference to the accompanying exemplary, schematic drawings, in which
Figure 1 illustrates a flange assembly according to an embodiment of the invention, and
Figure 2 illustrates a flange assembly according to another embodiment of the invention.

### Detailed Description of Drawings

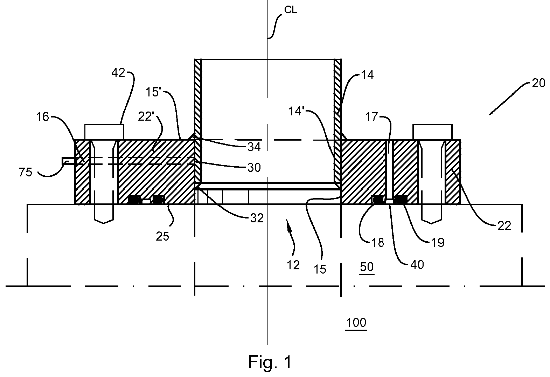

Figure 1 depicts schematically a flange assembly 20 according to an embodiment of the invention. The flange assembly 20 in the figure 1 is rotationally symmetrical in respect to a center axis CL. The assembly 20 is suitable for use in an attachment to a flange part 50 in a body of an apparatus, such as an internal combustion piston engine 100, for example. Such a flange part 50 may be separate or integral part of the engine 100. The flange assembly 20 comprises a flange 22, which is provided with a flange opening 12 arranged coaxially with the center axis CL. There is a pipe 14 axially arranged to extend into the flange opening 12 is so that the flange 22 is overlapping the end of the pipe 14'. The length of overlapping region can vary to some extent. The flange has a thickness in the direction of the center axis CL and the flange opening is advantageously a cylindrical opening.

According to an embodiment of the invention the pipe 14 is attached to the flange opening 12 by any suitable means or method, for example with a threaded connection. In such an embodiment the outer surface of the pipe and the inner surface of the flange are provided with mating threads. The attachment of the pipe to the flange is sealed so as to avoid a leakage of a fluid in the pipe 14 and the flange 22. In the assembly 20 the pipe 14 is sealed to the flange 22 by a first axial sealing 32 and a second axial sealing 34 arranged consecutively in the axial direction. The thread connection can be secured by e.g. suitable welds. The sealing can be any suitable sealing for connecting the pipe 14 to the flange opening 12, such as an o-ring or a sealant, in a fluid tight manner.

According to another embodiment of the invention the pipe 14 is attached to the flange opening 12 by welding. The weld simultaneously acts as an attachment and also as a seal between the flange 22 and the pipe 14 to avoid a leakage of a fluid in the pipe 14. Therefore the welds 32, 34 are referred to by using same reference numbers as the first and the second axial sealings. The assembly 20 comprises a first welding 32 at the end of the pipe. The first welding 32 is a continuous weld connecting the end of the pipe 14 to an inner surface 15 of the flange opening 12 in a sealed manner. The first welding 32 extends around the end of the pipe 14, thus sealing the periphery of the pipe completely. The assembly comprises further a second welding 34. The second welding 34 is a continuous weld connecting an outer surface of the pipe 14 to a surface 15' of the flange 22 at a side opposite to a connection surface 25 of the flange in a sealed manner. Also the second welding extends around the pipe 14. Both of the welding acts also as an axial sealing. Thus, also the welded connection comprises a first axial sealing 32 at the end of the pipe14, and a second axial sealing 34 outside the flange. In other words, the flange is connected to the pipe by having two axially consecutive sealings in the direction of the center axis CL. There is a gap 30 capable of acting as a flow channel for the fluid, which gap is formed axially between the first axial sealing 32 and the second axial sealing 34, and radially between the pipe 14 and the inner surface 15 of the flange opening 12.

Concerning both of the embodiments described above, according to the invention, the flange 22 is provided with a first leak indicating channel 16 which is arranged to extend from the inner surface 15 in the flange opening 12, through a body 22' of the flange 22, into the outer surface of the flange. The first leak indicating channel 16 opens at a location between the first axial sealing 32 and the second axial sealing 34 into a gap 30 between the pipe 14 and the flange 22. In case of possible failure or a breakage of the first axial sealing 32 between the flange 22 and the pipe 14, the leak of the sealing can be detected by means of the first leak indicating channel, and still the assembly itself does not leak because the second axial sealing 34 still prevents the leakage.

The first leak indicating channel 16 is advantageously provided with a leak detecting device 75 which in this embodiment plugs the channel 16 and is configured to provide e.g. electric or visual information of leak status.

The attachment of the flange 22 to the internal combustion engine 100, or the flange part 50 in the body of the engine 100, for example, comprises also other suitable sealings, such as annular sealing ring, around the flange opening 12, between the flange 22 and the flange part 50 in the body of the engine 100. Preferably, at least one annular sealing 18, like an o-ring, is mounted between the flange 22 and the engine 100.

In order to improve the handling of leakage risk, the flange 22 comprises in addition, or alternatively to the first leak indicating channel 16, a second leak indicating channel 17. Advantageously there are two annular radially consecutive sealing 18, 19 so that the leakage to outside of the flange assembly can be minimized. The second leak indicating channel 17 is arranged to extend from the connection surface 25 through a body 22' of the flange 22, into the outer surface of the flange. The second leak indicating channel 17 opens at a location radially between the first radial sealing 18 and the second radial sealing 19 into an annular groove 40 arranged between the first radial sealing 18 and the second radial sealing 19. In case of possible failure or a breakage of the first radial sealing 18 between the flange 22 and the engine 100, the leak of the sealing can be detected by means of the second leak indicating channel 17 as a leak flow in the second leak indicating channel, and still the assembly itself does not leak outside because the second radial sealing 19 still prevents the leakage.

The flange assembly further comprises connection means 42 for connecting the flange 22 to the body of the engine 100, which connection means are advantageously plurality of bolt and nut, or screw and thread.

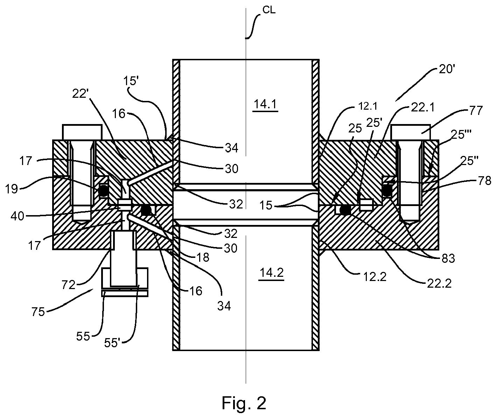

Figure 2 illustrates schematically a flange assembly 20' according to another embodiment of the invention connecting two pipes to each other at the ends thereof. The flange assembly 20' in the figure 2 is rotationally symmetrical in respect to a center axis CL. The flange assembly 20' comprises a first flange 22.1 with a first flange opening 12.1 and a second flange 22.2 with a second flange opening 12.2. The flanges are arranged against each other in the axial direction concentrically such that their connection surfaces 25 are facing each other. There is a pipe 14.1, 14.2 arranged into the each of the flange openings 12.1, 12.2. A first pipe 14.1 extends into the first flange opening 12.1 and a second pipe 14.2 extends into the second flange opening 12.2, so that the each flange is overlapping the end of the respective pipe. In other word, the flange covers axially the end of the pipe over a predetermined distance. The predetermined distance corresponds advantageously almost the thickness of the flange. The actual length of overlapping can vary depending on the case.

In the embodiment of the figure 2 the pipes 14.1, 14.2 are attached to the flanges by welding. The weld simultaneously acts as an attachment and also as a seal between the flange 22.1, 22.2 and the pipe 14.1, 14.2 to avoid a leakage of a fluid in the pipe 14. A first welding 32 in the assembly is made around the end of the first pipe 14.1, inside the first flange 22.1 joining the first pipe 14.1 and the first flange 22.1 together in sealed manner. The second welding 34 is made around the first pipe 14.1 outside the first flange 22.1 The second welding connects an outer surface of the first pipe 14.1 to a surface 15' of the flange 22.1 at a side opposite to a connection surface 25 of the flange in a sealed manner. In this way these weldings constitute two axially consecutive sealings. Therefore, the welding connection comprises a first axial sealing 32 at the end of the first pipe 14.1, and a second axial sealing 34 outside the flange. The second flange 22.2 also comprises corresponding two axially consecutive weldings i.e. axially consecutive sealings 32, 34 between the second pipe 14.2 and the second flange 22.2.

There is a gap 30 formed between the first pipe 14.1 and the first flange 22.1, and between the second pipe 14.2 and the second flange 22.2. The gap 30 extends axially between the first welding 32 and the second welding 34. The flange assembly 20' comprises a first leak indicating channel 16 which is arranged to extend from the gap 30 through a body of the flange 22.1,22.2, into the outside of the flange. The flanges 22.1, 22.2 comprise a connection surface 25 by means of which the opposite flanges are connected with each other in a sealed manner. The connection surface 25 is provided with a first radial sealing 18 and a second radial sealing 19 arranged consecutively in direction of potential leak onto the connection surface. The second leak indicating channel 17 arranged to extend from the connection surface 25 of the flange, through a body of the flange 22.1,22.2 into the outside of the flange.

In this embodiment of the invention, a first leak indicating channel 16 is arranged to the first flange 22.1, to extend from the flange opening 12.1, through a body of the flange 22.1, into the outside of the flange 22.1. The end of the first leak indicating channel 16 opens into a gap 30 between the pipe 14.1 and the flange 22.1 axially at a location between the first axial sealing 32 and the second axial sealing 34. Respectively, there is also a first leak indicating channel 16 arranged to the second flange 22.2, to extend from the inner surface 15 of the flange opening 12.2, through a body of the flange 22.2, into the outside of the flange 22.2. The leak indicating channel 16' opens into a gap 30 between the pipe 14.2 and the flange 22.2 at axial location between the first axial sealing 32 and the second axial sealing 34. The direction of both of the first leak indicating channels 16 through the flange body 22' is generally in radial direction, and may vary depending on the case. The first leak indicating channels 16 are connected with each other within the flange assembly when the flanges 22.1,22.2 are attached with each other such that they share a common leak indicating outlet 72. The leak indicating outlet 72 can be arranged to an axial surface of the flange as is shown in the figure or to the radial surface of the flange.

The flanges are provided with an annular groove 40 arranged at a radial distance from the center line CL to the connection surface 25 of the flanges. Here both of the flanges 22.1,22.2 are provided with the annular groove 40 at substantially equal radial distance so that they are substantially opposite each other between the flanges. It is conceivable that only one of the flanges in the assembly 20' is provided with the annular groove 40. The annular groove 40 is arranged radially, or generally in a direction of potential leak flow, between a first radial sealing 18 and a second radial sealing 19. The radial sealings are continuous and annular sealings. Advantageously, the first leak indicating channel 16 and the second leak indicating channel 17, opens into the annular groove 40, i.e., are in flow communication with the annular groove 40 and with each other.

Both of the first and the second leak indicating channels 16, 17 are also in flow communication with a leak detection device 75 connected to the common outlet 72. The leak detection device may also be connected to the annular groove 40 such that the first and the second leak indicating channels are connected to the leak detection device 75 is via the annular groove 40. Alternatively, the assembly can be provided with a separate leak detection device 75 arranged in both of the first 16 and the second 17 leak indicating channels i.e. the first and the second leak indicating channels may be fluidly separated from each other. The leak detection device 75 can be realized for example by means of pressure sensor. The leak detection device 75 can be based on a detector configured to detect a presence of the fluid which is arranged to flow in the pipes 14.1,14.2. For example, when the flange assembly is used in a gas line, such as natural gas, the detector is configured to detect the presence of natural gas or any of its main components.

According to an advantageous embodiment of the invention the connection surface 25 of the flange comprises a first portion 25' having a radially extending connection surface and a second portion 25" having an axially extending cylindrical connection surface, and a third portion 25‴ having a radially extending connection surface. The first portion 25' is radially inside the second portion 25" which is radially inside the third portion 25"'.

Advantageously, the first flange 22.1 has the first portion 25' which is axially thicker than the third portion 25"'. This forms an annular inner area with a raising face, and the second flange 22.2 has the first portion 25' which is axially thinner than the third portion 25‴ which in turn forms an annular inner depression mating the raised surface of the first flange 22.1. Thus, there is formed a radial connection surface in the first portion 25' of the connection surface 25 between the first flange 22.1 and the second flange 22.2, and a cylindrical connection surface in the second portion 25" extending in axial direction between the first flange 22.1 and the second flange 22.2. This provides the benefits of better sealing properties, an exact compression of sealing material, utilization of more suitable and specialized sealing materials, for example. The attachment of the first flange 22.1 to the second flange 22.2, comprises a suitable sealing in between the flange surfaces. Preferably, at least one radial sealing, such as an o-ring or similar, is mounted between the flanges. Advantageously at least two radial sealings are inserted between the flanges 22.1, 22.2. In the embodiment of the invention, a first radial sealing 18 is arranged between the radial connection surface 25' of the flange and the second radial sealing 19 is arranged between the cylindrical connection surface in the second portion 25" of the connection surface 25 of the flange 22. The selected one of the flange (or both of the flanges) comprises a radial groove 83 for the radial sealing. In addition, the flange assembly 20' comprises connection means for connecting the flanges 22.1, 22.2 against each other. The connection means are advantageously plurality of screw 77 and thread 78.

According to a preferred example of the invention, when operating under normal operational conditions, the first pipe 14.1 and the second pipe 14.2 are under pressure. The pressure is maintained by the first radial sealing 18 and by the first welding 32. Leakage may occur when, for example, the first radial sealing 18 breaks down or screws 77 are loosen in connection. The pressure from the piping is discharged between the flanges 22.1, 22.2. According to embodiment of the invention, the pressure is maintained by the second radial sealing 19, which is advantageously on the cylindrical flange connection surface 25". Thus, the connection stays pressure tight even in the case of screws loosen and there are no external leak from the flange assembly 20'. The pressure is further sealed by the first welding 32 of the both flanges. The leak occurred is detected from between the flanges 22.1, 22.2 via the annular groove 40 between the first radial sealing 18 and the second radial sealing 19. The leak detection device 75 detects the fault situation and breaks an electric circuit between wires 55'. This causes an alarm, by an alarm equipment 55 connected to the leak detection device 75. The leak detection device 75 is advantageously a leak detection valve.

According to a preferred example of the invention, in case when operating under conditions that the first welding 32 is damaged, the pressure is maintained by the first radial sealing 18 and/ or the second radial sealing 19. In addition, the second welding 34 of the both flanges maintain the pressure within the pipes. Therefore, there are no external leak from the flange assembly 60. The leak occurred is detected from the gap 30 and further via the leak indicating channel 16 between the first welding 32 and the second welding 34 of the respective flange. The leakage is detected and alarm occurs in the similar way as described above.

In this embodiment of the invention the flange assembly 20' comprises two consecutive sealing steps in the direction of the possible leakage. In more detailed, at least two consecutive sealing steps are provided in the axial direction of the flange assembly and also, at least two consecutive sealing steps in the radial direction of the flange assembly. The advantages are the completely leakage free flange assembly, with the reliable leak detection method.

While the invention has been described herein by way of examples in connection with what are, at present, considered to be the most preferred embodiments, it is to be understood that the invention is not limited to the disclosed embodiments, but is intended to cover various combinations or modifications of its features as long as they are covered by the appended claims. The details mentioned in connection with any embodiment above may be used in connection with another embodiment when such combination is technically feasible.

## Claims

1. A flange assembly (20,20'), comprising at least one flange (22, 22.1,22.2) provided with a flange opening (12), and a pipe (14, 14.1, 14.2) arranged into the flange opening (12,12.1,12.2) so that the flange (22, 22.1,22.2) is overlapping the end of the pipe, and the pipe (14, 14.1, 14.2) is sealed to the at least one flange (22, 22.1,22.2) by a first axial sealing (32) and a second axial sealing (34) arranged consecutively in axial direction, and a first leak indicating channel (16) is arranged to extend from the flange opening (12), through a body of the at least one flange (22, 22.1,22.2), into the outside of the flange (22, 22.1,22.2), and that the first leak indicating channel (16) opens into a gap between the pipe (14, 14.1, 14.2) and the flange (22, 22.1,22.2) at a location between the first axial sealing (32) and the second axial sealing (34), **characterized in that** the at least one flange (22, 22.1,22.2) comprises a connection surface (25) for connecting the flange (22, 22.1,22.2) in a sealed manner, and that the connection surface (25) is provided with a first radial sealing (18) and a second radial sealing (19) arranged consecutively onto the connection surface (25), and a second leak indicating channel (17) arranged to extend from the connection surface (25) of the at least one flange (22, 22.1,22.2), through a body of the at least one flange (22, 22.1,22.2), into the outside of the flange (22, 22.1,22.2), and that the second leak indicating channel (17) opens into the connection surface (25) of the at least one flange (22, 22.1,22.2) at a location between the first radial sealing (18) and the second radial sealing (19) on the connection surface (25).

2. A flange assembly (20,20') according to claim 1, **characterized in that** the flange assembly (20,20') comprises at least the first flange (22.1) with the first flange opening (12.1) and a second flange (22.2) with a second flange opening (12.2), which flanges are arranged with their connection surfaces (25) against each other, and the first pipe (14.1) arranged into the first flange opening (12.1) and a second pipe (14.2) arranged into the second flange opening (12.2), and that the pipes are attached to the flanges by a first continuous welding (32) around the pipe (14, 14.1, 14.2) inside the flange opening (12,12.1,12.2) and by a second continuous welding (34) around the pipe (14, 14.1, 14.2) outside the flange, for sealing the pipe (14, 14.1, 14.2) to the flange (22, 22.1,22.2), and that the assembly (20,20') comprises the first leak indicating channel (16) arranged to extend from the flange opening (12.1,12.2) of both of the flanges (22.1,22.2), through the body of the flange (22.1,22.2), into the outside of the flange (22.1,22.2), and that the first leak indicating channel (16) opens in the axial direction into a gap between the pipe (14, 14.1, 14.2) and the flange, at a location between the first continuous welding (32) and the second continuous welding (34).(22, 22.1,22.2).

3. A flange assembly (20,20') according to claim 1, **characterized in that** there is an annular groove (40) in the connection surface (25) of the at least one flange (22, 22.1,22.2) arranged radially between the first radial sealing (18) and the second radial sealing (19) into which the second leak indicating channel (17) is arranged to open.

4. A flange assembly (20,20') according to claim 1 or 3, **characterized in that** the first radial sealing (18) is arranged to a radially extending first portion of the connection surface (25') of the at least one flange ( 22.1,22.2) and the second radial sealing (29) is arranged to an axially extending second portion of the connection surface (25") of the at least one flange (22.1,22.2).

5. A flange assembly (20,20') according to claims 1-2, **characterized in that** the assembly (20,20') is provided with a leak detection device (75) and that the leak indicating channel (16, 17) is in flow communication with the leak detection device (75).

## Patentansprüche

1. Flanschbaugruppe (20, 20'), umfassend zumindest einen Flansch (22, 22.1, 22.2), der mit einer Flanschöffnung (12) versehen ist, und ein Rohr (14, 14.1, 14.2), das derart in der Flanschöffnung (12, 12.1, 12.2) angeordnet ist, dass der Flansch (22, 22.1, 22.2) das Ende des Rohrs überdeckt und das Rohr (14, 14.1, 14.2) am zumindest einen Flansch (22, 22.1, 22.2) durch eine erste axiale Dichtung (32) und eine zweite axiale Dichtung (34), die aufeinanderfolgend in der axialen Richtung angeordnet sind, abgedichtet ist, und wobei ein erster Leckanzeigekanal (16) dazu angeordnet ist, von der Flanschöffnung (12) durch einen Körper des zumindest einen Flanschs (22, 22.1, 22.2) in die Außenseite des Flanschs (22, 22.1, 22.2) zu verlaufen, und wobei der erste Leckanzeigekanal (16) in einen Spalt zwischen dem Rohr (14, 14.1, 14.2) und dem Flansch (22, 22.1, 22.2) an einer Stelle zwischen der ersten axialen Dichtung (32) und der zweiten axialen Dichtung (34) mündet, **dadurch gekennzeichnet, dass** der zumindest eine Flansch (22, 22.1, 22.2) eine Verbindungsfläche (25) zum abgedichteten Verbinden des Flanschs (22, 22.1, 22.2) umfasst, und dass die Verbindungsfläche (25) mit einer ersten radialen Dichtung (18) und einer zweiten radialen Dichtung (19), die aufeinanderfolgend auf der Verbindungsfläche (25) angeordnet sind, und einem zweiten Leckanzeigekanal (17) versehen ist, der dazu angeordnet ist, von der Verbindungsfläche (25) des zumindest einen Flanschs (22, 22.1, 22.2) durch einen Körper des zumindest einen Flanschs (22, 22.1, 22.2) in die Außenseite des Flanschs (22, 22.1, 22.2) zu verlaufen, und dass der zweite Leckanzeigekanal (17) in die Verbindungsfläche (25) des zumindest einen Flanschs (22, 22.1, 22.2) an einer Stelle zwischen der ersten radialen Dichtung (18) und der zweiten radialen Dichtung (19) an der Verbindungsfläche (25) mündet.

2. Flanschbaugruppe (20, 20') nach Anspruch 1, **dadurch gekennzeichnet, dass** die Flanschbaugruppe (20, 20') zumindest den ersten Flansch (22.1) mit der ersten Flanschöffnung (12.1) und einen zweiten Flansch (22.2) mit einer zweiten Flanschöffnung (12.2) umfasst, wobei die Flansche mit ihren Verbindungsflächen (25) aneinander angeordnet sind und das erste Rohr (14.1) in der ersten Flanschöffnung (12.1) angeordnet ist und ein zweites Rohr (14.2) in der zweiten Flanschöffnung (12.2) angeordnet ist, und dass die Rohre an den Flanschen durch eine erste fortlaufende Schweißung (32) um das Rohr (14, 14.1, 14.2) innerhalb der Flanschöffnung (12, 12.1, 12.2) und durch eine zweite fortlaufende Schweißung (34) um das Rohr (14, 14.1, 14.2) außerhalb des Flanschs zum Abdichten des Rohrs (14, 14.1, 14.2) am Flansch (22, 22.1, 22.2) angebracht sind, und dass die Baugruppe (20, 20') den ersten Leckanzeigekanal (16) umfasst, der dazu angeordnet ist, von der Flanschöffnung (12.1, 12.2) von beiden der Flansche (22.1, 22.2) durch den Körper des Flanschs (22.1, 22.2) in die Außenseite des Flanschs (22.1, 22.2) zu verlaufen, und dass der erste Leckanzeigekanal (16) in der axialen Richtung in einen Spalt zwischen dem Rohr (14, 14.1, 14.2) und dem Flansch an einer Stelle zwischen der ersten fortlaufenden Schweißung (32) und der zweiten fortlaufenden Schweißung (34) mündet.

3. Flanschanordnung (20, 20') nach Anspruch 1, **dadurch gekennzeichnet, dass** eine ringförmige Nut (40) in der Verbindungsfläche (25) des zumindest einen Flanschs (22, 22.1, 22.2) vorliegt, die radial zwischen der ersten radialen Dichtung (18) und der zweiten radialen Dichtung (19) angeordnet ist, in welche der zweite Leckanzeigekanal (17) zur Mündung angeordnet ist.

4. Flanschanordnung (20, 20') nach Anspruch 1 oder 3, **dadurch gekennzeichnet, dass** die erste radiale Dichtung (18) an einem radial verlaufenden, ersten Abschnitt der Verbindungsfläche (25') des zumindest einen Flanschs (22.1, 22.2) angeordnet ist und die zweite radiale Dichtung (29) an einem axial verlaufenden, zweiten Abschnitt der Verbindungsfläche (25") des zumindest einen Flanschs (22.1, 22.2) angeordnet ist.

5. Flanschbaugruppe (20, 20') nach Anspruch 1 bis 2, **dadurch gekennzeichnet, dass** die Baugruppe (20, 20') mit einem Leckerkennungsgerät (75) versehen ist, und dass der Leckanzeigekanal (16, 17) in Strömungsverbindung mit dem Leckerkennungsgerät (75) steht.

## Revendications

1. Ensemble de bride (20, 20'), comprenant au moins une bride (22, 22.1, 22.2) muni d'une ouverture de bride (12), et un tuyau (14, 14.1, 14.2) disposé dans l'ouverture de bride (12, 12.1, 12.2) de sorte que la bride (22, 22.1, 22.2) se superpose à l'extrémité du tuyau, et le tuyau (14, 14.1, 14.2) est scellé à la au moins une bride (22, 22.1, 22.2) par un premier joint axial (32) et un deuxième joint axial (34) disposés consécutivement dans la direction axiale, et un premier canal indicateur de fuite (16) est agencé pour s'étendre depuis l'ouverture de bride (12), à travers un corps de la au moins une bride (22, 22.1, 22.2), dans l'extérieur de la bride (22, 22.1, 22.2), et en ce que le premier canal indicateur de fuite (16) débouche dans un espace entre le tuyau (14, 14.1, 14.2) et la bride (22, 22.1, 22.2) à un emplacement entre le premier joint axial (32) et le deuxième joint axial (34), **caractérisé en ce que** la au moins une bride (22, 22.1, 22.2) comprend une surface de raccordement (25) pour raccorder la bride (22, 22.1, 22.2) de manière étanche, et que la surface de raccordement (25) est pourvu d'un premier joint radial (18) et d'un second joint radial (19) agencés consécutivement sur la surface de raccordement (25), et d'un second canal indicateur de fuite (17) agencé pour s'étendre à partir de la surface de raccordement (25) de la au moins une bride (22, 22.1, 22.2), à travers un corps de la au moins une bride (22, 22.1, 22.2), à l'extérieur de la bride (22, 22.1, 22.2), et **en ce que** le deuxième canal indicateur de fuite (17) débouche dans la surface de raccordement (25) de la au moins une bride (22, 22.1, 22.2) à un emplacement entre le premier joint radial (18) et le deuxième joint radial (19) sur la surface de raccordement (25).

2. Ensemble de bride (20, 20') selon la revendication 1, **caractérisé en ce que** l'ensemble de bride (20, 20') comprend au moins la première bride (22.1) avec la première ouverture de bride (12.1) et une deuxième bride (22.2) avec une deuxième ouverture de bride (12.2), lesquelles brides sont agencées avec leurs surfaces de raccordement (25) l'une contre l'autre, et le premier tuyau (14.1) disposé dans la première ouverture de bride (12.1) et un deuxième tuyau (14.2) disposé dans la deuxième ouverture de bride (12.2), et **en ce que** les tuyaux sont fixés aux brides par une première soudure continue (32) autour du tuyau (14, 14.1, 14.2) à l'intérieur de l'ouverture de bride (12, 12.1, 12.2) et par une deuxième soudure continue (34) autour de la conduite (14, 14.1, 14.2) à l'extérieur de la bride, pour sceller la conduite (14, 14.1, 14.2) à la bride (22, 22.1, 22.2), et que l'ensemble (20, 20') comprend le premier canal indicateur de fuite (16) agencé pour s'étendre depuis l'ouverture de bride (12.1, 12.2) des deux brides (22.1, 22.2), à travers le corps de la bride (22.1, 22.2), vers l'extérieur de la bride (22.1, 22.2), et **en ce que** le premier canal indicateur de fuite (16) débouche dans la direction axiale dans un espace entre le tuyau (14, 14.1, 14.2) et la bride, à un emplacement entre la première soudure continue (32) et la deuxième soudure continue (34) .

3. Ensemble de bride (20, 20') selon la revendication 1, **caractérisé en ce que** il y a une rainure annulaire (40) dans la surface de raccordement (25) sur au moins une bride (22, 22.1, 22.2) agencé radialement entre le premier joint radial (18) et le deuxième joint radial (19) dans lequel le deuxième canal indicateur de fuite (17) est disposé afin de s'ouvrir.

4. Ensemble de bride (20, 20') selon la revendication 1 ou 3, **caractérisé en ce que** le premier joint radial (18) est agencé sur une première partie s'étendant radialement de la surface de raccordement (25') de la au moins une bride (22.1, 22.2) et le deuxième joint radial (29) est agencé sur une deuxième partie s'étendant axialement de la surface de raccordement (25") de la au moins une bride (22.1, 22.2).

5. Ensemble de bride (20, 20') selon les revendications 1 à 2, **caractérisé en ce que** l'ensemble (20, 20') est pourvu d'un dispositif de détection de fuite (75) et que le canal indicateur de fuite (16, 17) est en communication fluidique avec le dispositif de détection de fuite (75).
